# EUROPÄISCHE PATENTSCHRIFT

(11) **EP 3 652 758 B1**
(45) Veröffentlichungstag und Bekanntmachung des Hinweises auf die Patenterteilung: **07.08.2024**
(21) Anmeldenummer: 18740185.6
(22) Anmeldetag: 10.07.2018
(51) Int. Cl.: H01B 7/42, H01B 7/18, H01B 7/32

(54) **ELEKTROKABEL FÜR DIE STROMVERSORGUNG VON FLUGZEUGEN, FAHRZEUGEN, SCHIFFEN ODER ANDEREN EINRICHTUNGEN**
ELECTRIC CABLE FOR SUPPLYING POWER TO AIRCRAFTS, VEHICLES, SHIPS OR OTHER DEVICES
CÂBLE ÉLECTRIQUE POUR L'ALIMENTATION ÉLECTRIQUE D'AÉRONEFS, DE VÉHICULES, DE NAVIRES OU D'AUTRES DISPOSITIFS

(30) Priorität: 14.07.2017 CH 9242017
(43) Veröffentlichungstag der Anmeldung: 20.05.2020
(73) Patentinhaber: Studer Aeronautical AG, 5014 Gretzenbach (CH)
(72) Erfinder: STUDER, Christoph, 5014 Gretzenbach (CH); STUDER, Geraldine, 5014 Gretzenbach (CH)
(74) Vertreter: Luchs, Willi
(86) Internationale Anmeldenummer: PCT/EP2018/068677
(87) Internationale Veröffentlichungsnummer: WO 2019/011920

(56) Entgegenhaltungen:
- EP-A2- 1 111 626
- WO-A1-03/083879
- WO-A1-2013/138266
- CH-A2- 709 972
- CN-A- 106 098 212
- DE-A1- 10 040 601
- DE-C- 720 060
- ES-T3- 2 319 618
- US-A- 1 686 782
- US-A1- 2014 227 909

## Beschreibung

Die Erfindung betrifft ein Elektrokabel für die Stromversorgung von Flugzeugen, Schienenfahrzeugen, Kraftfahrzeugen, Schiffen oder anderen Einrichtungen.

Es ist in der Druckschrift WO 03/083879 ein Dreileiterkabel bestehend aus drei miteinander verseilten Elektrokabeln offenbart, die je einen Stromleiter und einen Neutral-und/oder Rückleiter aufweisen, wobei letztere aus einer Anzahl von Einzelleitern gebildet sind, die konzentrisch um den Stromleiter und einer Isolation herum verteilt sind. Um diese herum ist zudem ein Schutzmantel aufgebracht. Dieses Dreileiterkabel eignet sich zur Energieübertragung mit Wechselstrom mit einer Frequenz von mindestens 50 Hz. Es ist vorgesehen, den Stromleiter im Querschnitt etwa doppelt so gross wie derjenige des Rückleiters vorzusehen.

In einer gattungsmässigen Druckschrift CN 106 098 212 ist ein verschleissfestes Kabel offenbart, welches mehrere nebeneinander angeordnete als Kabel ausgebildete Leiter aufweist, wie einen Stromleiter, einen Steuerungsleiter, einen Nullleiter, eine Abschirmung als Mittelleitungskabel, Standby-Erweiterungsleiter, einen Deckmantel, einen TPE-Innenmantel und einen TPU-Aussenmantel, welcher entlang seines Aussenumfangs verteilte nockenförmige gewindeartige Erhebungen umfasst. Dieses Kabel ist mit den jeweils als Einzelkabel ausgebildeten Leitern aufwändig hergestellt und es eignet sich daher bloss für Spezialanwendungen.

Bei einem Leistungskabel gemäss der Druckschrift ES 2 319 618 T3 ist ein zentraler Leiter beschichtet mit einem Halbleiter, umgeben von einer Isolationsschicht, einem Schutzband und einem Aussenmantel mit schraubenförmigen Schutzelementen vorgesehen, die jeweils ebenso aus einem nockenförmigen Querschnitt bestehen.

In der Druckschrift EP 1 111 626 ist ein Mehrleiterkabel offenbart, bei dem am Aussenumfang eine Anzahl von vorstehenden Elementen, die sternenförmig ausgebildet sind, vorgesehen. Nebstdem besteht dieses Mehrleiterkabel aus einem zentralen Leiter und einer Isolationsschicht. Dieses Mehrleiterkabel eignet sich aber nicht für die Anwendung für Gleichstrom mit einer optimalen Aufteilung der Ströme.

Solche Elektrokabel werden bei der Versorgung von elektrischer Energie bei Flugzeugen, Schienenfahrzeugen, Automobilen, Kraftfahrzeugen oder Schiffen etc. eingesetzt, welche vorzugsweise an eine Gleichstrom- oder an eine Wechselstromquelle angeschlossen werden. Die Versorgung dient zum Beispiel dem Laden der Batterien und/oder der gleichzeitigen Speisung des Bordnetzes. Es wird normalerweise aus dem Versorgungsnetz eine Wechselspannung von 50 bzw. 60 Hz bezogen und danach in die gewünschte Spannungsform konvertiert.

Die Versorgungsspannung beträgt bei kleineren Flugzeugen in der Regel 28 Volt mit Gleichstrom, währenddem bei grossen Passagierflugzeugen oder Frachtern eine Wechselspannung von 115 bzw. 200 Volt bei einer Frequenz von 400Hz oder noch höheren Frequenzen vorgesehen ist.

Neuerdings werden insbesondere bei Militärflugzeugen erhöhte Versorgungsspannungen von jeweils 270 V Gleichstrom verwendet, was den Bezug grösserer Leistungen vereinfacht, aber negative Konsequenzen für den Personenschutz und die Beherrschung von Kurzschlüssen bewirkt.

Bekannte Elektrokabel zum Laden von Batterien bei Flugzeugen oder ähnlichem sind so ausgebildet, dass bei Gleichspannung entweder ein einzelnes Kabel als Plus- und eines als Minusleiter als billigste Lösung, die jeweils abschnittweise zusammengebunden werden, oder elektrisch besser, wenn der Plus- als Vorleiter und der Minus- als Rückleiter jeweils abwechselnd und miteinander verdrillt in zwei bzw. mehrere Einzelleiter aufgeteilt verwendet werden. Dieser Aufbau ergibt einen geringeren Induktivitätsbelag und damit verbunden ist ein geringerer Spannungsverlust bei Wechselstrom, aber ein gutes Übertragungsverhalten bezüglich EMV, selbst wenn Störungen überlagert sind. Bei Gleichstrom haben zudem zwei parallele unverdrillte Einzelleiter die unangenehme Eigenschaft, dass ferritische Teile einer Magnetisierung ausgesetzt sind. Bessere Kabel mit kleinen Abständen zwischen den Plus- und Minus-Leitern und dank der Verseilung derselben erreichen eine kleine Induktivität und dank dem symmetrischen Aufbau auch eine gleichmässige Stromverteilung auf die einzelnen parallel geschalteten Einzelleiter. Kabel mit diesem Aufbau benötigen jedoch für entsprechend grosse Ströme auch entsprechend grosse Kupferquerschnitte zur Begrenzung der Verluste und des Spannungsabfalls.

Falls das Spannungssystem so aufgebaut ist, dass die Aussenhaut des Fahr- oder Flugzeuges in der Mitte zwischen dem positiven und dem negativen Pol liegt, so wird der Zentrumsleiter aus 2 n positiven und negativen isolierten Leitern aufgebaut und der konzentrische Schirm an Masse gelegt. So kann wiederum der Personenschutz gewährleistet werden.

Es gibt Anwendungen für die Übertragung grosser Lade-Ströme, bei denen die Begrenzung der Temperaturerwärmung so gelöst ist, dass im Kabelinnern mehrere Röhrchen für die Zirkulation von Kühl- Flüssigkeit hindurchgeführt sind, welche die Wärme aus dem Kabel wegführen und damit ermöglichen, dass die Kabeltemperatur vorgegebene Werte nicht überschreitet. Diese Flüssigkeitskühlung ist jedoch ein erschwerender Faktor bezüglich Komplexität und Gestehungs- sowie Unterhaltskosten solcher Kabel.

Wenn immer möglich, vermeidet man es daher, leitende Flüssigkeiten und Elektrizität im gleichen Andienkabel zu führen, zum Beispiel Wasser, welches elektrisch leitend ist. Da im Flugzeugbereich auch vielfach fahrbare Aggregate eingesetzt werden, die Witterungen, wie Frost sowie Erschütterungen ausgesetzt sind, wird auf Flüssigkeiten im Kabel und deren Kühlsysteme wenn immer möglich verzichtet, da sich damit die Systeme komplizieren und eventuelle Leckagen überwacht werden müssten.

Der Erfindung liegt die Aufgabe zu Grunde, ein Elektrokabel nach der eingangs erwähnten Gattung derart zu verbessern, dass mit diesem bei vorausgesetzter optimaler Aufteilung der Ströme auf die einzelnen Leiter beim Benutzen des Kabels verbesserte Eigenschaften in Bezug auf die Entstehung eines magnetischen Feldes bei Gleichstrom, eine weitgehende Verhinderung einer Überhitzung bzw. ein verbesserter Personenschutz bei einer Beschädigung des Aussenmantels desselben erreicht werden, sowie auch seine mechanische Belastung dauerhaft verbessert wird.

Die Aufgabe ist erfindungsgemäss nach den Merkmalen des Anspruchs 1 gelöst.

Mit dieser dem Aussenmantel des Elektrokabels zugeordneten vorzugsweise über den gesamten Umfang verteilten, nach aussen vorstehenden Verstärkungselementen ergeben sich Vorteile in verschiedener Hinsicht.

Mit diesen vorzugsweise über den gesamten Umfang des Kabels vorstehenden Verstärkungselementen als Kühlrippen wird eine Erhöhung der Oberfläche des Kabels und folglich eine verbesserte Wärmeableitung erzielt, da die hohen Leistungsströme stets zu einer überdurchschnittlichen Wärmeerzeugung führen.

Diese vorstehenden Verstärkungselemente dienen auch als Schutz des Kabels gegen Abrieb, d.h. bei einem Ziehen des Elektrokabels auf dem Boden wird nicht unmittelbar sein Aussenmantel, sondern zuerst werden diese Verstärkungselemente verschlissen. Wegen der geringeren Reibung dank der kleineren Auflagefläche verringert sich zudem der Kraftaufwand, wenn das Kabel über den Boden gezogen werden muss. Aufgrund der geringeren Erwärmung des Elektrokabels zumindest aussenseitig bei den Verstärkungselementen ist bei einer Berührung des Kabels durch das Bodenpersonal oder einen Benutzer ausserdem sichergestellt, dass das Elektrokabel unmittelbar nach dem Gebrauch aussen nicht derart heiss ist, dass sich der Benutzer verbrennen kann. Gleichzeitig ergibt sich dadurch der Vorteil des Berührungsschutzes mit einer massiv geringeren Verbrennungsgefahr und dem angenehmeren Gefühl eines Benutzers in Bezug auf die Wärmebelastung beim Anfassen.

Diese Elektrokabel werden in aller Regel vom Bodenpersonal oder von Benutzern zu der entsprechenden Steckdose gezogen und bei dieser eingesteckt. Mit der erfindungsgemässen Massnahme wird der Personenschutz zudem massiv verbessert, weil bei einer Beschädigung des Kabels immer zuerst das Massepotential, welches zu der Aussenkarosserie des Flugzeugs, des Autos oder des Motorfahrrades etc. führt, berührt wird. Damit ist der Benutzer potentialmässig geschützt.

Die Erfindung sowie weitere Vorteile derselben sind nachfolgend anhand von Ausführungsbeispielen unter Bezugnahme auf die Zeichnung näher erläutert. Es zeigt:
- Fig. 1: ein perspektivisch und im Querschnitt dargestelltes erfindungsgemässes Elektrokabel;
- Fig. 2: eine Variante des perspektivisch und im Querschnitt dargestellten Elektrokabels nach Fig. 1;
- Fig. 3: ein perspektivisch und im Querschnitt dargestelltes Elektrokabel als verseiltes Mehrleiterkabel Dieses Mehrleiterkabel wird nicht beansprucht.
- Fig. 4: eine Variante eines im Querschnitt dargestellten Elektrokabels;
- Fig. 5: ein perspektivisch und im Querschnitt dargestelltes Elektrokabel als Variante für Frequenzen von 400 Hz; Dieses Kabel fällt nicht unter den Gegenstand der Ansprüche 1-12.
- Fig. 6: ein perspektivisch und im Querschnitt dargestelltes Elektrokabel als typisches Antriebskabel; Dieses Kabel fällt nicht unter den Gegenstand der Ansprüche 1-12.
- Fig. 7: eine schematische Ansicht eines durch Tragmittel aufgehängten Elektrokabels;
- Fig. 8: eine schematische Ansicht eines mit Führungselementen ausgestattetes Elektrokabel zur Führung am Boden;
- Fig. 9: eine schematische Ansicht einer durch auf dem Boden bewegbaren Halteeinrichtung mit integriertem Elektrokabel;
- Fig. 10: eine Vorderansicht eines erfindungsgemässen Steckers für ein Elektrokabel; und
- Fig. 11: eine perspektivische Ansicht einer Variante eines nicht beanspruchten Steckers für ein Elektrokabel insbesondere für Flugzeuge.

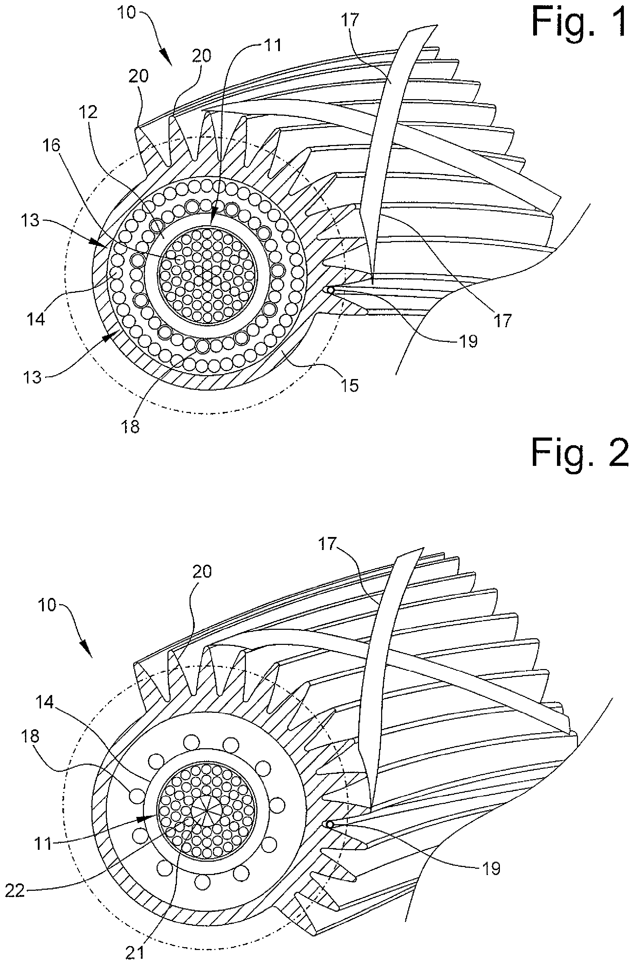

Fig. 1 zeigt ein Elektrokabel 10, welches insbesondere für die Stromversorgung von Flugzeugen, Fahrzeugen, Schiffen oder anderen Einrichtungen einsetzbar ist. Im Betriebszustand ist es für das Anschliessen an eine jeweilige Steckdose des Flugzeugs bewegbar ausgebildet. Vorteilhaft kann es auch von einer Rolle auf- bzw. abgerollt werden.

Das Elektrokabel 10 ist mit einem zentralen Stromleiter 11 mit einer Isolation 12 und einen konzentrisch um diesen angeordneten Rückleiter 13 bestehend aus einer Anzahl von miteinander verseilten Einzelleitern 14 versehen. Dieser Rückleiter 13 ist mit einem Gesamtquerschnitt dimensioniert, der annähernd demjenigen des aus Leiterdrähten 16 bestehenden Stromleiters 11 entspricht. Zudem ist ein Aussenmantel 15 vorgesehen, der aus einem ein- oder mehrschichtigen Kunststoff besteht.

Dieser zentrale Stromleiter 11 sowie der Rückleiter 13 sind aus Kupfer oder Aluminium oder einem anderen gut elektrisch leitenden Material hergestellt. Dabei werden die negativen Leiterdrähte 14 wie ein konzentrischer Schirm aussen an der Peripherie angeordnet, während die positiven Einzelleiter 16 innen vorzugsweise mit doppelter Isolation 12 geführt sind.

Wenn mit diesem Elektrokabel 10 höhere Frequenzen übertragen oder hochfrequente Ausgleichsströme geführt werden, müssen die zentralen Leiterdrähte 16 und die konzentrischen Schirm- oder Schutzleiterdrähte wegen des Skineffekts durch Einzel- oder Bündel-Isolationen auf mehrere kleinere Leiter zueinander isoliert werden, damit eine grössere Leiteroberfläche entsteht.

In dem den Stromleiter 11 konzentrisch umgebenden Rückleiter 13 sind zwischen den Einzelleitern 14 mehrere Kontrolladern 18 als Steuer- und/oder Blindadern eingebettet, welche zu Kontroll- und/oder Überwachungszwecken verwendet werden. Diese Kontrolladern 18 sind vorzugsweise in der äusseren Lage isoliert mitgeführt und weisen gegenüber dem an Masse gelegten Minusleiter nur eine geringe Spannungsdifferenz auf. Sie können auch paarweise verdrillt und so eingebettet sein, dass eine geringere Empfindlichkeit gegen elektromagnetische Störfelder erzielt wird.

Diese äusseren Einzelleiter 14 sind beim Flugzeug mit seiner Aussen-Karosserie (Masse) verbunden und können je nach Konfiguration geerdet sein. Dies entspricht einer an Masse gelegten Schirmung und dient sowohl der EMV Optimierung als auch dem Personenschutz, welcher durch diese Anordnung massiv verbessert ist, weil bei jeglicher Verletzung des Kabelmantels immer zuerst das Massepotential der Karosserie des Flugzeugs, Autos oder Motorfahrrades etc. berührt wird. Diese Einzelleiter 14 sind in der Regel als Minusleiter ausgelegt, da auch die Masse in der Regel am Minuspotential angeschlossen wird.

Erfindungsgemäss sind dem Aussenmantel 15 vorzugsweise über den gesamten Umfang verteilte, nach aussen vorstehende Verstärkungselemente 20 zugeordnet, durch welche gegenüber des zylindrischen Aussenmantels eine vergrösserte Aussenfläche zwecks Erhöhung des Wärmeableitvermögens des Elektrokabels 10 gebildet ist.

Vorteilhaft sind die beim Aussenmantel 15 vorstehenden Verstärkungselemente 20 als sternenförmig von diesem wegragende Längslamellen ausgebildet, welche sich über die gesamte Kabellänge schrauben- oder mäanderförmig zwecks grösserer Flexibilität erstrecken. Diese Längslamellen sind mit einem V- oder andersförmigen Querschnitt und mit einer ausreichenden Höhe versehen, damit ihre Oberflächen ausreichend Wärme ableiten können. Sie könnten statt V-förmig jeweils auch rechteck-, pilzförmig oder ähnlich ausgebildet sein.

Das Elektrokabel 10 ist aussenseitig bei den Verstärkungselementen 20 vorzugsweise mit zusätzlichen Aussenbändern 17 oder ähnlichem umwickelt. Diese schraubenförmig verlaufenden, an den Spitzen 20' der Längslamellen anliegenden Aussenbänder 17 sind beabstandet zueinander angeordnet. Durch ihre Abstützung und Verstärkung soll der Abrieb der Längslamellen reduziert und ein Zusammendrücken derselben verhindert werden. Dies betrifft insbesondere die Längslamellen, die unterseitig auf dem Boden aufliegen. Diese Aussenbänder 17 sind daher aus einem abriebfesten Material gefertigt und enthalten zum Beispiel Polyamid- oder HDPE-Bestandteile.

In den aus Kunststoff bestehenden Aussenmantel 15 und den Verstärkungselementen 20 können vorzugsweise Graphit und/oder metallische Zusätze gleichmässig verteilt enthalten, um die Wärmeleitfähigkeit zu erhöhen.

Zudem können die wenigstens eine Isolation 12 und/oder der Aussenmantel 15 aus je einem durch Vernetzung verbesserten Kunststoff für eine thermisch erhöhte Belastbarkeit ausgelegt sein.

Ferner ist ein von aussen sichtbarer Lichtleiter 19 zwischen zwei Verstärkungselementen 20 geführt, um Betriebszustände, Betriebsinformationen und/oder um das Elektrokabel im Dunkeln sichtbar zu machen. Selbstverständlich könnten je nach Anwendung auch zwei oder mehrere beispielsweise gegenüberliegende Lichtleiter 19 vorgesehen sein.

Fig. 2 zeigt ein Elektrokabel 10', welches an sich gleich ausgebildet ist wie dasjenige nach Fig. 1 und daher nicht mehr in allen Einzelheiten erläutert ist. Als einziger Unterschied ist im Zentrum des Stromleiters 11' eine Schlauchleitung 21 eingebettet, um das Elektrokabel mit einem durch diese gepumptes Medium, vorzugsweise Luft, zu kühlen. Diese Schlauchleitung 21 ist mit inneren Stegen 22 verstärkt und sie ist endseitig beim Elektrokabel 10' an eine Pumpe angeschlossen. Selbstverständlich könnten bei Bedarf auch mehrere solcher Schlauchleitungen 21 in dem Elektrokabel eingebettet sein.

Die Schicht mit den Verstärkungselementen bzw. Kühlrippen kann auch in Form eines Schrumpfschlauches nachträglich auf das fertige Kabel aufgebracht werden. Dieser Schrumpfschlauch kann mit oder ohne Kleber versehen sein und wird dort angebracht, wo zusätzliche Kühlung durch verbesserte Wärmeabgabe erwünscht ist.

Diese Verstärkungselemente 20 können nur als Kühlrippen oder auch für nicht thermische Erhöhung der Oberfläche vorgesehen sein, bei dem sie lediglich als mechanische Schutzfunktion und zur Reduzierung der Reibungskräfte dienen. In diesem Falle sind die Aussenflächen der Verstärkungselemente 20 insbesondere bei den Spitzen 20' aus einer ein- oder vorzugsweise mehrlagigen Schicht mit unterschiedlichen Farben gebildet, um damit die Abriebstärke des Elektrokabels zu visualisieren.

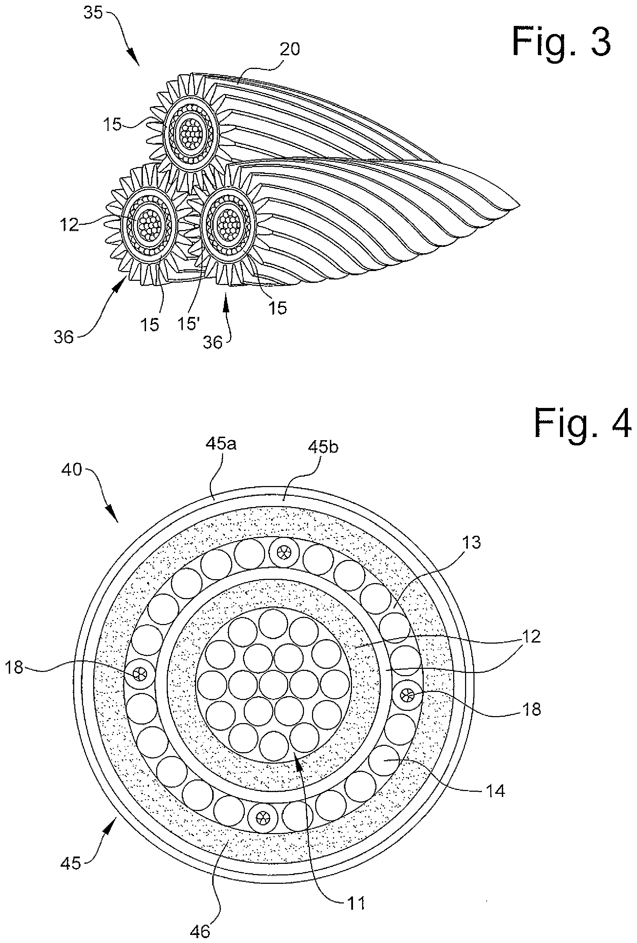

In Fig. 1 bzw. in Fig. 2 sind diese Verstärkungselemente 20 nicht über den gesamten Umfang dargestellt, wobei diese aber vorteilhaft rundum vorgesehen sein sollten, wie in Fig. 3 ersichtlich ist.

Fig. 3 zeigt ein Mehrleiterkabel 35 mit einzelnen Elektrokabeln 36, welche jeweils an sich gleich wie diejenigen nach Fig. 1 ausgestaltet sind, und daher nachfolgend nurmehr die Unterschiede erläutert sind. Diese drei einzelnen Elektrokabel 36 sind vorteilhaft miteinander verseilt und sie weisen jeweils nur über einen Teil des Aussenumfangs Verstärkungselemente 20 auf. In dem sich gegenseitig berührenden Bereich 15' dieser einzelnen Elektrokabel 36 sind diese Verstärkungselemente 20 weggelassen, wodurch diese Elektrokabel 36 mit ihren Aussenmänteln 15 gegenseitig in Kontakt stehen. Dies hat den Vorteil, dass das aus diesen gebildete Mehrleiterkabel 35 mit einem kleineren Aussendurchmesser dimensioniert sein kann als wenn die Einzelkabel rundum solche Verstärkungselemente aufweisen würden.

Im Prinzip könnten die einzelnen Elektrokabel aber auch wie bei demjenigen nach Fig. 1 ausgestaltet und entsprechend rundum mit diesen Verstärkungselementen 20 versehen sein.

Bei dem Elektrokabel 40 gemäss Fig. 4 ist anstelle von diesen nach aussen vorstehenden Verstärkungselementen 20 ein mehrschichtiger Aussenmantel 45 mit einer zylindrischen Aussenfläche vorgesehen. Im Rahmen der Erfindung setzt sich dieser Aussenmantel 45 vorzugsweise wiederum aus zwei Schichten zusammen, namentlich aus einer äusseren Schicht 45a aus einem wärmeleitenden Kunststoff und einer inneren Schicht 45b, welche aus verschiedenartigen Materialien hergestellt sein können, sowie aus einer weiteren Schicht 46, die aus einem PCM-Material (Phase Change Material) gefertigt sein kann.

Ansonsten ist dieses Elektrokabel 40 ähnlich wie dasjenige nach Fig. 1 ausgestaltet. Es weist einen Stromleiter 11, einen konzentrisch umgebenden Rückleiter 13 mit Einzelleitern 14 und den Aussenmantel 45 auf. Zudem ist eine mehrschichtige dicke Isolation 12 zwischen dem Stromleiter 11 und dem Rückleiter 13 vorgesehen, welche den positiven Leiter gegenüber dem Schirm- oder Schutzrückleiter zuverlässig isoliert.

Der sich über die Kabellänge erstreckende Kältespeicher 46, zum Beispiel bestehend aus einem PCM-Granulat, welcher innerhalb eines kurzen Zeitraums eine hohe Wärmemenge aufnehmen kann, ermöglicht, dass das Elektrokabel beim Gebrauch Hitzebelastungen ausgleichen kann.

Die Schichten 45a, 45b des Aussenmantels 45 können ebenso aus einer ein- oder mehrlagigen Schicht mit unterschiedlichen Farben gebildet, um damit die Abriebstärke des Elektrokabels zu visualisieren.

Vorteilhaft ist wenigstens ein Sensor zwecks Temperaturmessung in wenigstens einem Leiter 18 oder im Stecker am Kabelende integriert, was nicht näher dargestellt ist. Mittels dieser während dem Aufladen messbaren Temperatur kann die Stromleistung des Elektrokabels in dem Sinne geregelt werden, dass eine festgelegte Maximaltemperatur im Elektrokabel bzw. im anfangs- und/oder endseitigen Stecker nicht überschritten wird.

Es kann auch ein sich über die Kabellänge erstreckender drahtförmiger Sensor zur Ermittlung der Wärme integriert sein, mittels dem analog geregelt oder ein vorübergehendes Abschalten der Stromzufuhr bewirkt werden könnte.

Alternativ könnte ein anfangs- und/oder endseitiger Stecker mit integriertem Temperaturschalter vorgesehen sein, durch welchen bei Überschreitung einer Grenztemperatur die Stromleistung reduziert würde.

Gegenüber der Lösung mit zwei einzelnen Kabeln für eine Gleichstromübertragung kann zudem die Gefahr der Entstehung eines zu starken Magnetfelds vermieden werden, welches zu einer Magnetisierung der angrenzenden Eisenteile bei Trasses, in einer Betonarmierung oder ähnlichem führen könnte.

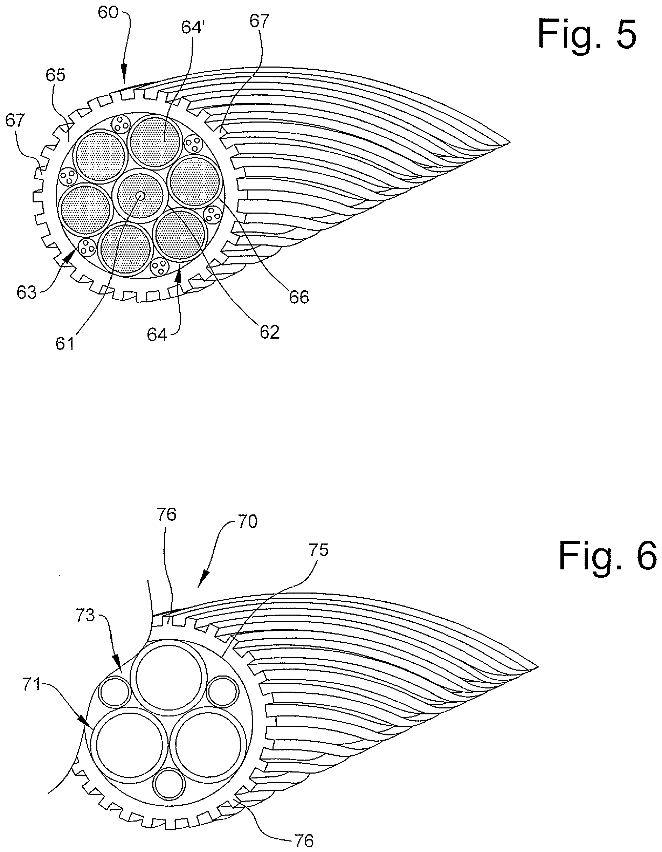

Fig. 5 zeigt ein Elektrokabel 60, welches sich für die Anwendung bei einer hohen Frequenz, wie von 400 Hz eignet. Es ist mit einem oder mehreren zentralen Stromleitern 61 mit je einer Isolation 62 und konzentrisch um diese angeordnete Leiter bestehend aus einer Anzahl von um den zentralen Stromleiter verseilten Einzelleitern 64, die jeweils aus einer Anzahl von verlitzten Drähten 64' und einer Isolation 66 gebildet sind.

Zusätzlich sind Spickelleiter 63 aus Einzelleitern zwischen den Rückleitern vorgesehen, die zu Messungs-, Steuerungs- und/oder Regelungszwecken verwendbar sind. Diese Einzelleiter 64 und die Spickelleiter 63 sind von einem ein- oder mehrschichtigen Aussenmantel 65 umgeben.

In Fig. 5 sind dem Aussenmantel 65 über den gesamten Umfang verteilte, nach aussen vorstehende Verstärkungselemente 67 zugeordnet, welche im Querschnitt jeweils eine annähernd rechteckige Form aufweisen. Mit diesen als Kühl-und Verstärkungsrippen ausgebildeten Verstärkungselementen 67 ist das thermische Verhalten optimiert und es wird eine Verminderung der Reibungskräfte erzielt. Vorteilhaft verlaufen diese Verstärkungselemente 67 schrauben- oder mäanderförmig um das Elektrokabel.

Fig. 6 zeigt ein Elektrokabel 70, welches typischerweise als Motorenkabel oder Versorgungskabel verwendet wird und als Mehrleiterkabel mit einzelnen Elektrokabeln 71 hergestellt ist, so ähnlich wie das Mehrleiterkabel 35. Es sind daher nachfolgend nurmehr die Unterschiede zu diesem dargetan. Bei den Elektrokabeln 71 sind aussen noch zwischen diesen Spickelleiter 73 oder ähnlichem mitverseilt. Der Aussenmantel 75 umhüllt dabei die drei Elektrokabel 71 und die Spickelleiter 73 rohrförmig.

In Fig. 6 sind dem Aussenmantel 75 vorteilhaft über den gesamten Umfang verteilte, nach aussen vorstehende Verstärkungselemente 76 zugeordnet, welche im Querschnitt jeweils eine annähernd rechteckige Form aufweisen. Damit sind diese Verstärkungselemente 76 ähnlich wie diejenigen bei dem Elektrokabel 60 nach Fig. 5 ausgestaltet und ergeben sich hinsichtlich Thermik und Reibung dieselben Vorteile.

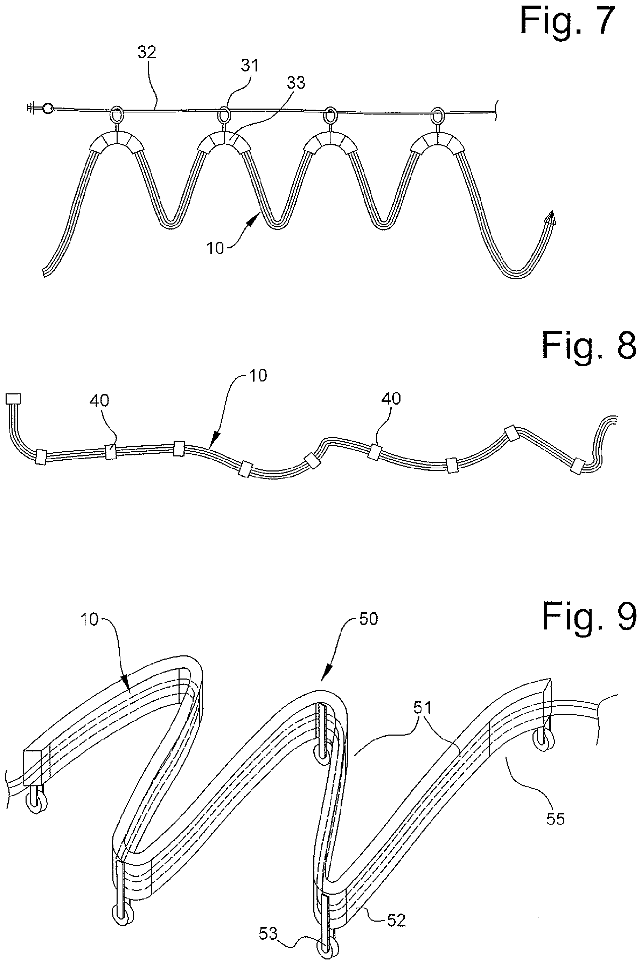

Gemäss Fig. 7 ist das Elektrokabel 10 für seine Bewegbarkeit zum Anschliessen an eine Steckdose beim Flugzeug etc. mit Tragmitteln 31 an einem Längselement 32 zur Führung in der Luft aufgehängt. Auf diese Weise ergibt sich bei diesem eine bessere Kühlung und ein geringerer Verschleiss. Es sind mehrere solcher Tragmittel 31 beabstandet zueinander durch Halterungen 33 am Elektrokabel 10 befestigt und längsverschiebbar an dem Längselement 32 gehalten. Bei dieser Anwendung sind beim Elektrokabel 10 keine Aussenbänder erforderlich.

Fig. 8 zeigt eine Variante, bei der das Elektrokabel 10 für seine Bewegbarkeit zum Anschliessen an eine Steckdose beim Flugzeug etc. mit Führungselementen 41 zur Führung am Boden versehen ist, wie zum Beispiel mit Hartkunststoff-Gleitringen. Die Führungselemente 41 könnten auch auf der Unterseite auf Rollen gelagert sein.

Gemäss Fig. 9 ist das Elektrokabel 10 in eine längliche Halteeinrichtung 50 eingelegt, welche schlangenförmig auf einem Boden 55 oder in der Luft bewegbar ist und damit das Kabel ebenfalls von einer zurückgezogenen in eine Ladeposition und umgekehrt verschoben werden kann. Diese Halteeinrichtung 50 besteht aus einem kastenförmigen Längsgehäuse 51 mit biegbaren Gelenkstellen 52 und aus auf der Unterseite desselben gelagerten Rollen 53, durch welche das Längsgehäuse 51 auf dem Boden 55 mit wenig Kraftaufwand verfahrbar ist. Dieses Längsgehäuse 51 könnte auch durchlüftet sein, um das Elektrokabel 10 zusätzlich zu kühlen, oder die Wandungen des Längsgehäuses könnten auch perforiert sein, um Luft durchzulassen.

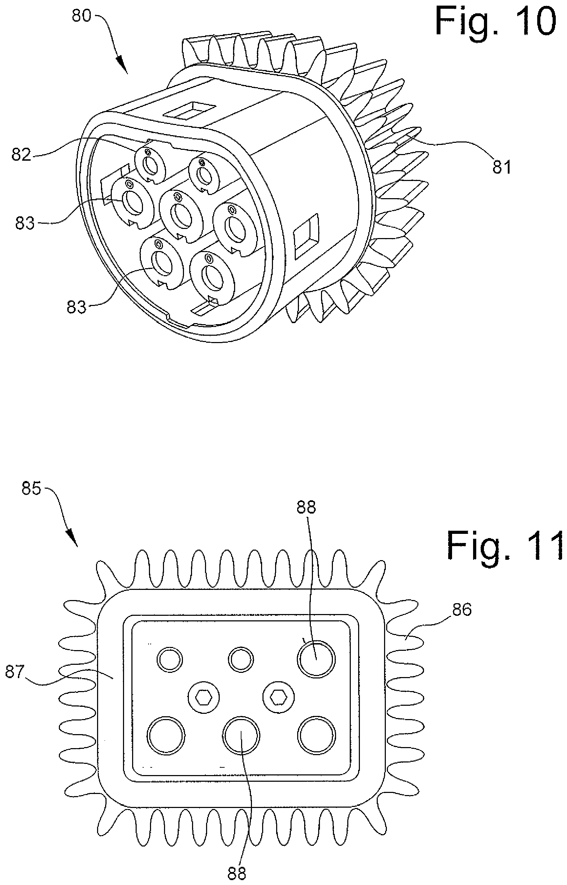

Fig. 10 und Fig. 11 zeigen jeweils einen Stecker 80, 85 für ein Elektrokabel nach Fig. 1 bis Fig. 6. Dieser jeweilige Stecker 80, 85 ist wie beim Elektrokabel 10, 10' auf der Aussenseite seines Gehäuses 82, 87 mit solchen Verstärkungselementen 81, 86 mit rippenartiger Struktur nach aussen vorstehend ausgebildet, damit die Steifigkeit beim Stecker erhöht wird. Diese Verstärkungselemente 81, 86 sind dabei über eine gewisse Länge vorstehend zum jeweiligen Gehäuse 82, 87 angeordnet, wobei der in die Steckdose einsteckbare Gehäuseteil mit den Einzelsteckern 83, 88 selbstverständlich ohne diese Verstärkungselemente versehen ist.

Man erreicht mit diesen zudem als Kühlrippen wirkenden Verstärkungselementen 81, 86, dass die Berührungstemperatur an den Rippen ebenfalls deutlich tiefer ausfällt, bei vorausgesetzter gleicher Leistung, als bei einem Stecker ohne Kühlverstärkung. Damit können Verbrennungen beim Benutzer verhindert werden.

Diese Verstärkungselemente 81, 86 können alternativ mit einem relativ weichen gummiartigen Material hergestellt sein. Damit erhöht sich die Dämpfwirkung, wenn der Stecker zum Beispiel auf den Boden fallengelassen wird. Das Innere der Stecker wird vorzugsweise ausgegossen, um eine möglichst gute Wärmeleitfähigkeit vom Kontakt bis zur Oberfläche zu erreichen.

Die Erfindung ist mit den obigen Beispielen ausreichend dargetan. Sie könnte aber selbstverständlich noch durch andere Varianten veranschaulicht sein. So könnten mehrere zum Beispiel seilförmig zueinander verwundene Stromleiter im Innern des Kabels enthalten sein.

## Patentansprüche

1. Elektrokabel für die Stromversorgung von Flugzeugen, Schienenfahrzeugen, Kraftfahrzeugen, Schiffen oder anderen Einrichtungen, bei welchem ein zentraler, aus Leiterdrähten (16) bestehender Stromleiter (11) mit wenigstens einer Isolation (12), ein konzentrisch um diesen angeordneten Rückleiter (13) bestehend aus einer Anzahl von miteinander verseilten Einzelleitern (14) und mehrere zwischen den Einzelleitern (14) eingebettete Kontrolladern (18) als Steuer- und/oder Blindadern sowie ein Aussenmantel (15) vorgesehen ist, wobei das Elektrokabel (10, 40) als ein Einleiterkabel ausgebildet ist, wobei die Einzelleiter (14) des Rückleiters (13) mit einem Gesamtquerschnitt dimensioniert sind, der annähernd demjenigen des aus den Leiterdrähten (16) bestehenden Stromleiters (11) entspricht, und wobei dem Aussenmantel (15) über den gesamten Umfang verteilte, nach aussen vorstehende Verstärkungselemente (20) zugeordnet sind oder der Aussenmantel (45) aus mehreren Schichten (45a, 45b, 46) besteht.

2. Elektrokabel nach Anspruch 1, **dadurch gekennzeichnet, dass** die beim Aussenmantel (15) vorstehenden Verstärkungselemente (20) als sternenförmig von diesem wegragende Längslamellen ausgebildet sind, welche auf den Aussenmantel aufschrumpfbar sind.

3. Elektrokabel nach Anspruch 2, **dadurch gekennzeichnet, dass** diese Längslamellen mit einem V- oder andersförmigen Querschnitt versehen sind und sich schrauben- oder mäanderförmig entlang des Elektrokabels erstrecken.

4. Elektrokabel nach einem der vorhergehenden Ansprüche 1 bis 3, **dadurch gekennzeichnet, dass**
die beim Aussenmantel vorstehenden Verstärkungselemente (20) mit zusätzlichen Aussenbändern (17) oder ähnlichem umwickelt sind.

5. Elektrokabel nach Anspruch 1, **dadurch gekennzeichnet, dass** der um diesen einen zentralen Stromleiter (11) konzentrisch angeordnete Rückleiter (13) bestehend aus einer Anzahl von Einzelleitern (14) vorgesehen ist, wobei der aus blanken oder einzeln oder bündelweise isolierten Einzelleitern (14) aufgebaute Rückleiter (13) mit einem Gesamtquerschnitt dimensioniert ist, der annähernd demjenigen des aus blanken, für höhere Frequenzen einzeln oder gruppenweise isolierten Leiterdrähten (16) bestehenden Stromleiters (11) entspricht.

6. Elektrokabel nach einem der vorhergehenden Ansprüche 1 bis 5, **dadurch gekennzeichnet, dass**
die Aussenflächen der Verstärkungselemente (20) aus einer ein- oder mehrlagigen Schicht mit unterschiedlichen Farben gebildet sind, um damit die Abriebstärke des Elektrokabels zu visualisieren.

7. Elektrokabel nach einem der vorhergehenden Ansprüche 1 bis 6, **dadurch gekennzeichnet, dass**
ein sich über die Kabellänge erstreckender Kältespeicher zum Beispiel bestehend aus einem PCM-Granulat enthalten ist, welcher innerhalb eines kurzen Zeitraums eine hohe Wärmemenge absorbieren und speichern kann, damit das Elektrokabel beim Gebrauch Hitzebelastungen ausgleichen kann.

8. Elektrokabel nach einem der vorhergehenden Ansprüche 1 bis 7, **dadurch gekennzeichnet, dass**
mindestens eine Schlauchleitung (21) vorzugsweise im Kabelzentrum eingebettet ist, um mit einem durch diese gepumptes Medium, vorzugsweise Luft, das Elektrokabel (10') zu kühlen.

9. Elektrokabel nach einem der vorhergehenden Ansprüche 1 bis 8, **dadurch gekennzeichnet, dass**
zumindest ein von aussen sichtbarer Lichtleiter (19) vorzugsweise zwischen zwei Verstärkungselementen (20) geführt ist, um Betriebszustände oder Betriebsinformationen übermitteln zu können und/oder um das Elektrokabel im Dunkeln sichtbar zu machen.

10. Elektrokabel nach einem der vorhergehenden Ansprüche 1 bis 9, **dadurch gekennzeichnet, dass**
endseitig ein Stecker mit integriertem Temperaturschalter angeschlossen ist, durch welchen bei Überschreitung einer Grenztemperatur die Stromleistung reduziert wird.

11. Elektrokabel nach einem der vorhergehenden Ansprüche 1 bis 10, **dadurch gekennzeichnet, dass**
das Elektrokabel (10, 10') für seine Bewegbarkeit zum Anschliessen an eine Steckdose beim Flugzeug etc. mit Tragmitteln (31) an einem Längselement (32) zur Führung in der Luft aufhängbar ist.

12. Elektrokabel nach einem der vorhergehenden Ansprüche 1 bis 11, **dadurch gekennzeichnet, dass**
das Elektrokabel (10, 10') für seine Bewegbarkeit zum Anschliessen an eine Steckdose beim Flugzeug etc. mit Führungselementen (41) oder mit einer auf dem Boden bewegbaren Halteeinrichtung (50) zur Führung am Boden (55) versehen ist.

## Claims

1. An electric cable for supplying power to aircrafts, rail vehicles, motor vehicles, ships or other devices, which is provided with a central current conductor (11) consists of conductor wires (16) and with at least one insulation (12), a return conductor (13), which is arranged concentrically around the current conductor (11), consisting of a number of individual conductors (14), which are stranded together, and several controlling chargers (18) as control and/or dummy cores, which are embedded between the conductors (14), and an outer casing (15), wherein the electric cable (10, 40) is designed as a single cable, wherein the individual conductors (14) of the return conductor (13) are dimensioned with an overall cross-section, which corresponds approximately to that of the conductor (11) made of the conductor wires (16), wherein reinforcing elements (20) are associated with the outer casing (15) distributed over the entire circumference and allocated to the outer casing (15), or the outer casing (45) consists of a plurality of layers (45a, 45b, 46).

2. The electric cable according to claim 1, **characterised in that**
the reinforcing elements (20) projecting in the outer casing (15) are designed as longitudinal lamellae protruding away from this casing in a star shape, which elements can be shrunk onto the outer casing.

3. The electric cable according to claim 2, **characterised in that**
these longitudinal lamellae are provided with a cross-section which is V-shaped or differently shaped, and the lamellae extend along the electric cable in a helical or a meandering shape.

4. The electric cable according to one of the preceding claims 1 to 3, **characterised in that**
the reinforcing elements (20) projecting in the outer casing have additional external strips (17) or the like wrapped around them.

5. The electric cable according to claim 1, **characterised in that**
return conductors (13) consisting of a number of individual conductors (14) are provided arranged concentrically around this one or around this central conductor (11), wherein the return conductor (13) assembled from individual conductors (14), which are insulated by blanks or individually or in bundles, is dimensioned with an overall cross-section, which corresponds approximately to that of the conductor (11) made of conductor wires (16) insulated by blanks, for higher frequencies individually or in groups.

6. The electric cable according to one of the preceding claims 1 to 5, **characterised in that**
the outer surfaces of the reinforcing elements (20) are formed from a single-layer or multilayer sheet of different colours in order, as a result, to display visually the wear strength of the electric cable.

7. The electric cable according to one of the preceding claims 1 to 6, **characterised in that**
a cold store extending over the length of the cable, for example made of a PCM granulate, is contained therein, which cold store can absorb and store a large quantity of heat within a short period of time, in order that the electric cable can equalise thermal loads during use.

8. The electric cable according to one of the preceding claims 1 to 7, **characterised in that**
at least one hose assembly (21) is embedded, preferably in the centre of the cable, in order to cool the electric cable (10') with a medium, preferably air, pumped therethrough.

9. The electric cable according to one of the preceding claims 1 to 8, **characterised in that**
at least one optical fibre (19), visible from the outside, is guided preferably between two reinforcing elements (20), in order to be able to communicate operating states or operating information and/or make the electric cable visible in the dark.

10. The electric cable according to one of the preceding claims 1 to 9, **characterised in that**
a plug with an integrated temperature switch is connected at one end, through which the power supply is reduced when a limit temperature is exceeded.

11. The electric cable according to one of the preceding claims 1 to 10, **characterised in that**
the electric cable (10, 10') can be hung on a longitudinal element (32) to be guided in the air with supporting means (31), to move the electric cable for connection to a socket in the aircraft etc.

12. The electric cable according to one of the preceding claims 1 to 11, **characterised in that**
the electric cable (10, 10') is provided with guide elements (41) or with a holding device (50) which can be moved along the ground, for guiding along the ground (55), to move the electric cable for connection to a socket in the aircraft etc.

## Revendications

1. Câble électrique pour l'alimentation électrique d'aéronefs, de véhicules ferroviaires, de véhicules automobiles, de bateaux ou d'autres dispositifs, dans lequel il est prévu un conducteur (11) de courant central, constitué de fils (16) conducteurs ayant au moins une isolation (12), un conducteur (13) de retour monté concentriquement autour de celui-ci et constitué d'un nombre de conducteurs (14) individuels toronnés entre eux et plusieurs brins (18) de contrôle incorporés entre les conducteurs (14) individuels comme brins de commande et/comme faux brins ainsi qu'une gaine (15) extérieure, dans lequel le câble (10, 40) électrique est constitué sous la forme d'un câble à un seul conducteur, dans lequel les conducteurs (14) individuels du conducteur (13) de retour sont dimensionnés en ayant une section transversale d'ensemble, qui correspond à peu près à celle du conducteur (11) constitué des fils (16) conducteurs et dans lequel, à la gaine (15) extérieure, sont associés des éléments (20) de renfort en saillie vers l'extérieur et répartis sur tout le pourtour ou la gaine (45) extérieure est constituée de plusieurs couches (45a, 45b, 46).

2. Câble électrique suivant la revendication 1, **caractérisé en ce que**
les éléments (20) de renfort en saillie de la gaine (15) extérieure sont constitués, en forme d'étoile, de lamelles longitudinales en s'en éloignant, qui peuvent se fretter sur la gaine extérieure.

3. Câble électrique suivant la revendication 2, **caractérisé en ce que**
ces lamelles longitudinales sont pourvues d'une section transversale en V ou d'une autre forme et s'étendent hélicoïdalement ou sous forme sinueuse le long du câble électrique.

4. Câble électrique suivant l'une des revendications 1 à 3 précédentes, **caractérisé en ce que**
les éléments (20) de renfort en saillie de la gaine extérieure sont enveloppés par des bandes (17) extérieures supplémentaires ou analogues.

5. Câble électrique suivant la revendication 1, **caractérisé en ce qu'**
il est prévu le conducteur (13) de retour, constitué d'un nombre de conducteurs (14) individuels, disposé concentriquement autour de ce un conducteur (11) de courant central, dans lequel le conducteur (13) de retour, constitué de conducteurs (14) individuels non isolés ou isolés individuellement ou à la manière d'un faisceau, est dimensionné en ayant une section transversale d'ensemble, qui correspond à peu près à celle du conducteur (11) de courant central constitué de fils (16) conducteurs non isolés, isolés individuellement ou groupe par groupe pour des fréquences assez hautes.

6. Câble électrique suivant l'une des revendications 1 à 5 précédentes, **caractérisé en ce que**
les surfaces extérieures des éléments (20) de renfort sont formées d'une couche à une strate ou à plusieurs strates de couleurs différentes, pour visualiser ainsi l'intensité de l'usure du câble électrique.

7. Câble électrique suivant l'une des revendications 1 à 6 précédentes, **caractérisé en ce qu'**
il est prévu un accumulateur de froid, s'étendant sur la longueur du câble, constituant, par exemple, en un granulé de PCM, qui, dans un court laps de temps, peut absorber et accumuler une grande quantité de chaleur, afin que le câble électrique puisse compenser des charges de chaleur à l'usage.

8. Câble électrique suivant l'une des revendications 1 à 7 précédentes, **caractérisé en ce qu'**
au moins un conduit (21) souple est incorporé, de préférence au centre du câble, pour refroidir le câble (10') électrique par un fluide, de préférence de l'air, pompé dans ce conduit.

9. Câble électrique suivant l'une des revendications 1 à 8 précédentes, **caractérisé en ce qu'**
au moins une fibre optique (19) visible de l'extérieur passe, de préférence entre deux éléments (20) de renfort, afin de pouvoir transmettre des états de fonctionnement ou des informations de fonctionnement et/ou afin de rendre le câble électrique visible dans l'obscurité.

10. Câble électrique suivant l'une des revendications 1 à 9 précédentes, **caractérisé en ce que**
du côté de l'extrémité est raccordé un connecteur à interrupteur de température intégré, par lequel on réduit la puissance du courant si une température limite est dépassée.

11. Câble électrique suivant l'une des revendications 1 à 10 précédentes, **caractérisé en ce que**
le câble (10, 10') électrique peut, pour sa mobilité pour le raccordement à une prise de courant dans un aéronef etc., être suspendu par des moyens (31) de support à un élément (32) longitudinal pour le guidage dans l'air.

12. Câble électrique suivant l'une des revendications 1 à 11 précédentes, **caractérisé en ce que**
le câble (10, 10') électrique est pourvu, pour sa mobilité pour le raccordement à une prise électrique dans un aéronef etc., être muni d'un élément (41) de guidage ou d'un dispositif (50) de maintien mobile sur le plancher pour le guidage sur le plancher (55).
